# EUROPÄISCHE PATENTSCHRIFT

(11) **EP 2 553 660 B1**
(45) Veröffentlichungstag und Bekanntmachung des Hinweises auf die Patenterteilung: **31.08.2016**
(21) Anmeldenummer: 11709398.9
(22) Anmeldetag: 21.03.2011
(51) Int. Cl.: G06K 9/00, G06T 19/20, G06T 7/20, H04N 7/18

(54) **VERFAHREN ZUR VISUALISIERUNG VON AKTIVITÄTSSCHWERPUNKTEN IN ÜBERWACHUNGSSZENEN**
METHOD FOR VISUALIZING ZONES OF HIGHER ACTIVITY IN MONITORING SCENES
PROCÉDÉ POUR VISUALISER DES ZONES D'ACTIVITÉ ACCRUE DANS DES SCÈNES DE SURVEILLANCE

(30) Priorität: 26.03.2010 DE 102010003336
(43) Veröffentlichungstag der Anmeldung: 06.02.2013
(73) Patentinhaber: Robert Bosch GmbH, 70442 Stuttgart (DE)
(72) Erfinder: GOTTSCHLAG, Daniel, 90419 Nürnberg (DE)
(86) Internationale Anmeldenummer: PCT/EP2011/054191
(87) Internationale Veröffentlichungsnummer: WO 2011/117170

(56) Entgegenhaltungen:
- WO-A2-2006/012645
- US-A1- 2008 170 120
- US-A1- 2010 013 931
- XIAOGANG WANG ET AL: "Correspondence-free multi-camera activity analysis and scene modeling", COMPUTER VISION AND PATTERN RECOGNITION, 2008. CVPR 2008. IEEE CONFERENCE ON, IEEE, PISCATAWAY, NJ, USA, 23. Juni 2008 (2008-06-23), Seiten 1-8, XP031297280, ISBN: 978-1-4244-2242-5 in der Anmeldung erwähnt
- S. Braumann: "Glyphenbasierte Techniken zur Informationsverarbeitung", , 2. Dezember 2006 (2006-12-02), Seiten 1-10, XP002634919, Gefunden im Internet: URL:http://isgwww.cs.uni-magdeburg.de/cv/l ehre/InfoVis/ws0506_material/Frank%20Terne %20-%20Stefan%20Braumann%20-%20Glyphen%20- %20FINAL.pdf [gefunden am 2011-04-29]
- SHAOHUA LIU ET AL: "Schematic Visualization of Object Trajectories Across Multiple Cameras for Indoor Surveillances", IMAGE AND GRAPHICS, 2009. ICIG '09. FIFTH INTERNATIONAL CONFERENCE ON, IEEE, PISCATAWAY, NJ, USA, 20 September 2009 (2009-09-20), pages 406-411, XP031652759, ISBN: 978-1-4244-5237-8
- ANONYMOUS: 'BESCHLEUNIGUNG' WIKIPEDIA, THE FREE ENCYCLOPEDIA, [Online] 15 März 2010, Seiten 1 - 8, XP055220072 Gefunden im Internet: <URL:https://de.wikipedia.org/w/index.php?t itle=Beschleunigung&oldid=71913172> [gefunden am 2015-10-12]
- ANONYMOUS: 'RUCK' WIKIPEDIA, THE FREE ENCYCLOPEDIA, [Online] 27 Juli 2009, Seiten 1 - 3, XP055220075 Gefunden im Internet: <URL:https://de.wikipedia.org/w/index.php?t itle=Ruck&oldid=62683936> [gefunden am 2015-10-12]

## Beschreibung

Die vorliegende Erfindung betrifft ein Verfahren zur Visualisierung von Aktivitätsschwerpunkten in einer durch wenigstens eine Überwachungseinrichtung überwachten Überwachungsszene sowie ein entsprechendes Überwachungssystem.

### Stand der Technik

Überwachungssysteme dienen zur Kontrolle von relevanten Bereichen und umfassen üblicherweise eine Mehrzahl von Überwachungseinrichtungen, beispielsweise Überwachungskameras, die an den relevanten Bereichen zur Aufnahme von Überwachungsszenen vorgesehen sind. Alternativ oder zusätzlich können auch beispielsweise laser- oder infrarotgestützte Bewegungssensoren, wie z.B. Bewegungsmelder oder Lichtschranken, verwendet werden. Als weiteres Beispiel sind Trittplatten zu nennen, die beim Betreten ein Signal auslösen. Die Überwachungsszenen können beispielsweise Parkplätze, Kreuzungen, Straßen, Plätze aber auch Bereiche in Gebäuden, Fabriken, Krankenhäusern oder dergleichen umfassen. Die von den Überwachungseinrichtungen aufgenommenen Daten, beispielsweise Bilddatenströme, werden in einer Überwachungszentrale zusammengeführt, wo diese entweder automatisiert oder durch Überwachungspersonal ausgewertet werden.

Insbesondere die manuelle Auswertung von Bilddatenströmen bereitet mitunter große Schwierigkeiten, da insbesondere in Überwachungsszenen mit einer Vielzahl sich bewegender Objekte, beispielsweise bei Straßenszenen, eine entsprechend große Anzahl bewegter Objekte überwacht werden muss, und dadurch, dass die Bildqualität der dargestellten Überwachungsszenen beispielsweise aufgrund von Beleuchtungsänderungen, Witterungseinfluss oder Verschmutzungen der Überwachungskameras häufig ungenügend sind. Üblicherweise überwachte Überwachungsszenen beinhalten dreidimensionale Objekte, wobei Bewegungsvorgänge häufig durch die Objekte verdeckt und damit einer direkten Beobachtung nicht zugänglich sind. Eine elektronische Unterstützung des Überwachungspersonals ist daher zweckmäßig.

Es ist allgemein bekannt, durch Multi-Kamera-Netzwerke erfasste Überwachungsszenen als dreidimensionale Modelle darzustellen (im folgenden als 3D-Szenenmodelle bezeichnet). Derartige 3D-Szenenmodelle können einen beliebigen Abstraktionsgrad aufweisen, beispielsweise können Oberflächen von überwachten Häusern, Signalen, Straßen und dergleichen als abstrahierte Flächengebilde dargestellt werden. In einem 3D-Szenenmodell kann auch eine abstrahierte, gitterförmige Wiedergabe dreidimensionaler Objekte erfolgen, so dass durch die Überwachungseinrichtungen erfasste, jedoch in der momentanen Ansicht des 3D-Szenenmodells verdeckte Objekte erkennbar werden. In derartigen 3D-Szenenmodellen besteht die Möglichkeit zur interaktiven Navigation, beispielsweise durch entsprechende Computersysteme.

Aus der DE 10 2007 048 857 A1 ist in diesem Zusammenhang ein Verfahren bekannt, das es erlaubt, ein dreidimensionales Szenenmodell mit realitätsnahen Texturen auszustatten, wobei die Texturen in regelmäßigen oder unregelmäßigen Abständen aktualisiert werden können.

Aus der WO 2009/068336 A2 ist eine modellbasierte 3D-Positionsbestimmung eines Objektes bekannt. Das Objekt wird dazu mit einer kalibrierten Kamera aufgenommen, wobei die 3D-Position des Objektes als Schnittpunkt der Sichtgeraden mit dem Szenenmodell bestimmt wird.

Der im Juli 2009 eingereichten Veröffentlichung von Sankaranarayanan et al., "Modeling and Visualization of Human Activities for Multi-Camera Networks" (EURASIP Journal on Image and Video Processing) ist ein System zu entnehmen, mit welchem die Projektion von in Bildern erkannten Personenbewegungen in 3D-Szenenmodelle möglich ist. Unter Verwendung eines *a priori*-Wissens der 3D-Struktur der Szene und der Kamerakalibrierung ist das System in der Lage, Personen zu lokalisieren, die sich durch die Szene bewegen. Aktivitäten von Interesse werden dadurch bestimmt, dass Modelle dieser Aktivitäten im Rahmen eines selbstlernenden Verfahrens mit den Beobachtungen verglichen werden.

Wang et al. beschreiben in "Correspondence-Free Multi-Camera Activity Analysis and Scene Modeling" (Proceedings of IEEE Computer Society Conference on Computer Vision and Pattern Recognition 2008) die Zusammenfassung gleichgerichteter Bewegungen, wodurch Aktivitätsschwerpunkte auch in überfüllten Szenen darstellbar sein sollen. Die Verwendung von 3D-Szenenmodell ist jedoch hiervon nicht umfasst.

Aus der US 2008/0170120 A1 ist ein System und ein Verfahren zur Darstellung von Überwachungsdaten bekannt.

Die Veröffentlichung "Schematic Visualization of Object Trajectories across Multiple Cameras for Indoor Surveillances" betrifft die Darstellung von Objekttrajektorie über eine Vielzahl von Kameras.

In den aus dem Stand der Technik bekannten Verfahren führt die Darstellung von Einzeltrajektorien bei einer Vielzahl bewegter Objekte häufig zu einer großen Unübersichtlichkeit und damit zu letztlich geringem Informationsgehalt. Durch Objekte verdeckte oder lediglich durch Einzelkameras erfasste Bewegungen können häufig nicht erfasst werden. Zudem nimmt die Qualität der Trajektorien bei Vorliegen fehlerhafter Objektkorrespondenzen, d. h. bei nicht absolut exaktem Kameraabgleich, häufig stark ab.

Es besteht daher weiterhin der Bedarf nach Verfahren zur Visualisierung von Aktivitätsschwerpunkten, insbesondere in Multi-Kamera-Netzwerken, die die genannten Nachteile des Standes der Technik überwinden.

### Offenbarung der Erfindung

Erfindungsgemäß werden ein Verfahren sowie ein Überwachungssystem mit den Merkmalen der unabhängigen Patentansprüche vorgeschlagen. Vorteilhafte Ausgestaltungen sind Gegenstand der Unteransprüche sowie der nachfolgenden Beschreibung.

Die vorliegende Erfindung kann insbesondere als ein System zur Echtzeit-Visualisierung von Aktivitätsschwerpunkten in Multi-Kamera-Netzwerken im Bereich der Videoüberwachungstechnik zum Einsatz kommen.

Es sei zu verstehen gegeben, dass die verwendeten Begriffe "Bewegungsaufkommen" und "Aktivitätsschwerpunkte" sowohl eine Bewegungsdichte als auch eine Bewegungsintensität umfassen können. Eine Bewegungsdichte kann sich auf eine Anzahl sich bewegender Objekte beziehen. Liegt eine Bewegung einer großen Anzahl sich bewegender Objekte vor, ist die Bewegungsdichte hoch. Eine Bewegungsintensität kann sich beispielsweise auch auf die Geschwindigkeit eines sich bewegenden Objektes beziehen. Je nach Anforderung kann eine Betonung einer Bewegungsdichte oder einer Bewegungsintensität in einer Überwachungsszene von Interesse sein. So kann beispielsweise ein Einzelobjekt, das sich schnell, jedoch getrennt von anderen Objekten bewegt, eine nähere Inaugenscheinnahme erfordern, oder es kann alternativ eine gezielte Beobachtung von Bereichen mit hoher Dichte sich bewegender Objekte gefordert sein.

### Vorteile der Erfindung

Mittels des erfindungsgemäßen Verfahrens ist eine Objekterkennung und Objektverfolgung durch Überwachungseinrichtungen, insbesondere durch Bildanalyse des Videomaterials mehrerer kalibrierter Kameras (alleinstehender Kameras ohne überlappende Sichtbereiche und Kameras mit überlappenden Sichtbereichen) möglich. Daneben können jedoch ebenso andere Überwachungseinrichtungen, wie z.B. Bewegungssensoren, verwendet werden.

Es kann eine Abbildung (Projektion) aufgrund erkannter Personen- und Objektbewegungen festgestellter Aktivitätsschwerpunkte in ein virtuelles 3D-Modell der überwachten Szene erfolgen. Hierdurch ist eine unmittelbare visuelle Hervorhebung von Regionen mit hohem Bewegungsaufkommen bzw. mit Aktivitätsschwerpunkten direkt im 3D-Modell möglich. Durch die bevorzugte Möglichkeit zur interaktiven Navigation im 3D-Szenenmodell kann eine direkte Ansteuerung derartiger Regionen mit hohem Bewegungsaufkommen bzw. von Aktivitätsschwerpunkten erfolgen, um diese Bereiche näher zu betrachten.

Die Abbildung erkannter Personen- und Objektbewegungen in ein virtuelles 3D-Modell der überwachten Szene erfolgt beispielsweise so, wie es in der WO 2009/068336 A2 der Anmelderin beschrieben ist, auf die an dieser Stelle bezüglich Details zur Ausführung verwiesen wird. Für die dort offenbarte modellbasierte 3D-Positionsbestimmung wird ein Objekt mit einer kalibrierten Kamera aufgenommen, wobei die 3D-Position des Objektes als Schnittpunkt der Sichtgeraden mit dem Szenenmodell bestimmt wird. Die 2D-3D-Abbildung kann auch über einfache Bodenmodelle erfolgen, bei denen die im Bild erkannten Objekte direkt mithilfe der Kamerakalibrierungsinformation auf die Bodenebene projiziert werden. Bei andersartigen Sensoren (z.B. Bewegungsmelder) ist ggf. keine Abbildung erforderlich, da die Sensordaten direkt ins Modell übernommen werden können, sofern die Position des Sensors im Szenenmodell bekannt ist.

3D-Modelle lassen sich grundsätzlich aus dem jeweils generierten Bildmaterial erzeugen, können aber auch beispielsweise vorab, etwa durch Aufmaßdaten und/oder CAD-Software, bereitgestellt werden.

Das vorgeschlagene Verfahren stellt in einem entsprechenden System vorteilhafterweise eine Aktivität (wie etwa ein Bewegungsaufkommen bzw. eine Aktivitätsschwerpunkt) abstrakt dar. Bewegungen mehrerer räumlichen Nahobjekte können zusammengefasst werden, um Aktivitätsschwerpunkte zu identifizieren. Die Quantität der Aktivität kann durch die Größe einer hervorgehobenen Region und ihre Farbe kodiert werden. Insbesondere können als Maß für die Quantität die Anzahl, Geschwindigkeit, Beschleunigung und/oder Ruck bewegter Objekte dienen. Eine derartige visuelle Darstellung der Aktivitätsschwerpunkte kann dem Bild des virtuellen 3D-Modells überlagert werden, so dass auch bei Objektverdeckungen das Bewegungsaufkommen erkennbar bleibt. Die Visualisierung kann insbesondere in einer Falschfarbendarstellung (Farbkodierung der Aktivitätshöhe) erfolgen.

Die vorgeschlagenen Maßnahmen erlauben daher auch in überfüllten Szenen eine übersichtliche Darstellung von Bewegungsintensitäten. Weil im Rahmen des erfindungsgemäßen Verfahrens Bewegungen vorzugsweise durch Einzelkameras erfasst werden können, spielt eine mögliche fehlerhafte Objektkorrespondenz zwischen Kameras nur mehr eine untergeordnete Rolle.

Die Darstellung im Rahmen des erfindungsgemäßen Verfahrens kann einen beliebigen Abstraktionsgrad aufweisen, so dass keine Ablenkung von relevanten Bewegungen durch eine übermäßig realistische Darstellung mehr erfolgen kann. Im Gegensatz zu den zuvor genannten Verfahren des Standes der Technik kann eine aktuelle Anzahl aktiver Objekte genutzt und in Echtzeit ausgewertet werden. Im durch Sankaranarayanan et al. offenbarten Verfahren ist es beispielsweise nicht möglich, Aktivitäten in verdeckten Szenenbereichen (z.B. hinter Wänden) zu erkennen. Die dort vorgesehene photorealistische Darstellung lenkt durch eine Vielzahl von Texturdetails und durch komplexe Personenmodelle von der eigentlichen Bewegung ab. Hierdurch fällt die Bewegung weniger stark ins Auge, so dass, insbesondere im Rahmen einer manuellen Auswertung von Überwachungsszenen bzw. entsprechenden Bilddatenströmen, eine Bewegung möglicherweise nicht oder zu spät erkannt wird. Diese Nachteile werden durch das erfindungsgemäß vorgeschlagene abstrahierende Verfahren zur Echtzeit-Visualisierung von Aktivitätsschwerpunkten überwunden.

Im Gegensatz zu der zuvor genannten Veröffentlichung von Wang et al. ist es dem Betrachter nun möglich, sich bewegende Objekte (Bewegungsaufkommen), die durch alleinstehende Kameras (d.h. durch Kameras, die keine überlappende Sichtbereiche mit anderen Kameras aufweisen) aufgenommen werden, visuell in den Gesamtkontext einzubeziehen. Ebenso ist im Gegensatz hierzu eine Akkumulation von Bewegungen über einen längeren Zeitraum nicht mehr erforderlich.

Somit wird durch die erfindungsgemäßen Maßnahmen ein direktes visuelles Feedback für Bewegungen auch in verdeckten Bereichen des 3D-Modells durch eine dem 3D-Bild überlagerte Aktivitätsanzeige erzeugt. Durch eine Kodierung der Quantität des Bewegungsaufkommens durch visuelle Mittel, wie beispielsweise Farbe, kann eine sehr rasche und einleuchtende Darstellung von möglicherweise kritischen Bewegungsvorgängen erzielt werden.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Kurze Beschreibung der Zeichnungen
Figur 1 zeigt eine schematische Darstellung eines Verfahrens gemäß einer besonders bevorzugten Ausführungsform der Erfindung.
Figur 2 zeigt eine Visualisierung von Aktivitätsschwerpunkten gemäß einer besonders bevorzugten Ausführungsform der Erfindung.

### Ausführungsform(en) der Erfindung

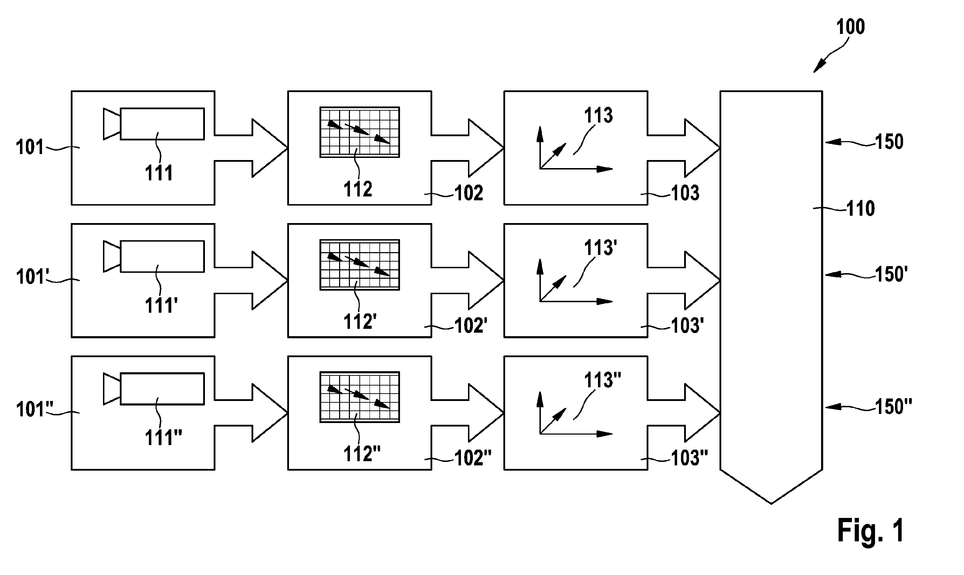

In Figur 1 ist ein Verfahren gemäß einer besonders bevorzugten Ausführungsform der Erfindung schematisch dargestellt und insgesamt mit 100 bezeichnet. In Figur 100 sind drei parallel ablaufende Teilverfahren 150, 150' und 150" dargestellt, die jeweils einzelnen Überwachungseinrichtungen zugeordnet sind. Es sei zu verstehen gegeben, dass im Rahmen der vorliegenden Erfindung auch eine andere Anzahl paralleler Überwachungsteilverfahren ablaufen kann, die dann jeweils eigenen Überwachungseinrichtungen zugeordnet sind. Eine Bündelung von Teilverfahren ist ebenso möglich. Nachfolgend wird der Übersichtlichkeit halber lediglich Teilverfahren 150 veranschaulicht.

In einem optionalen Schritt 101 erfolgt eine Bildaufnahme, d.h. das Generieren von Bildmaterial, durch eine hier als Überwachungskamera ausgebildete Überwachungseinrichtung 111. Die Überwachungseinrichtung 111 ist insbesondere kalibriert, so dass ihre Position, Ausrichtung, Brennweite usw. bekannt sind.

In Schritt 102 wird, beispielsweise durch eine der Überwachungseinrichtung 111 zugeordnete Auswerteeinrichtung, eine Identifizierung eines sich bewegenden Objekts und/oder die Erzeugung einer Trajektorie 112 des sich bewegenden Objekts in dem Bildmaterial vorgenommen. In Schritt 103 erfolgt eine räumliche Lokalisierung 113 des im vorigen Schritt 102 erkannten Objekts bzw. der erkannten Objekte 112 in einem 3D-Szenenmodell. Beispielsweise wird für die 3D-Positionsbestimmung ein Objekt mit der kalibrierten Kamera 111 aufgenommen, wobei die 3D-Position des Objektes als Schnittpunkt der Sichtgeraden mit dem Szenenmodell bestimmt wird. Bezüglich weiterer Details zur Ausführung sei an dieser Steller auf die WO 2009/068336 A2 der Anmelderin verwiesen. Das Szenenmodell wird vorzugsweise aus CAD-Daten erhalten.

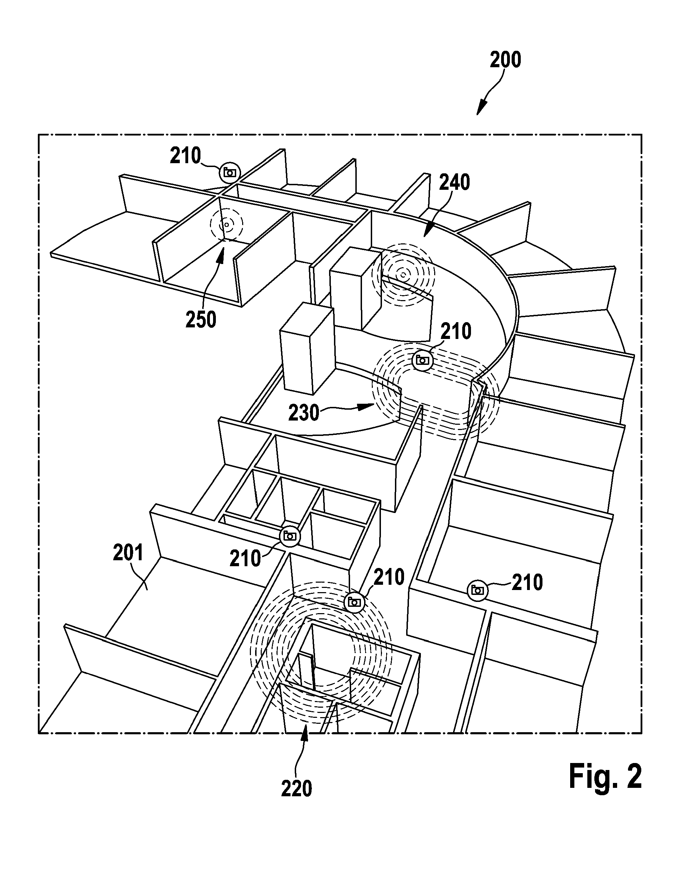

In Schritt 110 werden die jeweiligen Teilverfahren 150, 150' und 150" gebündelt und zur Visualisierung der Bewegungsschwerpunkte der bewegten Objekte verwendet, wie in der nachfolgenden Figur 2 erläutert. In Figur 2 ist die Visualisierung der Aktivitätsschwerpunkte, wie sie im Rahmen einer besonders bevorzugten Ausführungsform vorgenommen wird, veranschaulicht und insgesamt mit 200 bezeichnet.

In Figur 2 ist eine Darstellung von erkannten bzw. bestimmten Aktivitätsschwerpunkten in einem dreidimensionalen Szenenmodell dargestellt, wie sie auf Grundlage der Erfindung beispielsweise auf einem Computerbildschirm erhalten werden kann. Auf dem Computerbildschirm ist zunächst das 3D-Szenenmodell 201 dargestellt, das im vorliegenden Beispiel eine Anzahl von Räumen aus einer perspektivischen Ansicht zeigt. Das 3D-Szenenmodell kann beispielsweise aus CAD-Daten erhalten werden. Ein Betrachter bzw. Nutzer eines entsprechenden Auswertesystems blickt auf den Computerbildschirm, auf dem eine virtuelle 3D-Szene, in diesem Fall als Gebäude veranschaulicht, dargestellt ist. Die Räume sind an bestimmten Stellen mit kalibrierten und justierten Kameras als Bildaufnahmevorrichtung ausgestattet, deren Standpunkte hier angezeigt werden (optional) und innerhalb des 3D-Szenenmodells mit jeweils 210 gekennzeichnet sind.

Werden von den Kameras 210 - beispielsweise auf Grundlage einer bevorzugten Ausführungsform gemäß Figur 1 - Objekte erkannt, erfolgt gemäß einer bevorzugten Ausführungsform der Erfindung die Darstellung durch eine Anzeige von Aktivitätsschwerpu nkten.

Gemäß Figur 2 werden vier Aktivitätsschwerpunkte 220, 230, 240 und 250 dargestellt, die - ähnlich einem Wärmebild oder Höhenlinien - die erkannte Aktivität darstellen. Als Maß für die Aktivität wird im vorliegenden Beispiel die Anzahl der sich bewegenden Objekte verwendet. Es ist erkennbar, dass bei 250 nur eine geringe Aktivität vorliegt, was einem bewegten Objekt entsprechen kann. Bei 240 liegt eine höhere Aktivität vor, was beispielsweise zwei bewegten Objekten entsprechen kann. Bei 230 liegt eine erneut höhere und auch räumlich stärker verteilte Aktivität vor, woraus geschlossen werden kann, dass sich an der Stelle 230 eine Anzahl von Objekten in einem größeren Bereich bewegt. An der Stelle 220 schließlich liegt eine sehr hohe, aber konzentrierte Aktivität vor, woraus geschlossen werden kann, dass sich sehr viele bewegte Objekte an dieser Stelle befinden.

Als Alternatives Maß für einen Aktivitätsschwerpunkt kann die Bewegungsgeschwindigkeit dienen. In diesem Falle werden sich schneller bewegende Objekte mit einer höheren Intensität und sich langsamer bewegende Objekte mit einer geringeren Intensität dargestellt.

Die Intensitätsverteilung kann beispielsweise als auf das jeweilige Maß normierte Glockenkurve um das bewegte Objekt bereitgestellt werden, wobei sich dann die Intensitäten von benachbarten Objekten entsprechend addieren können. Als Maß für die Aktivität dient in bevorzugter Ausführungsform die Anzahl bewegter Objekte. Es sei jedoch zu verstehen gegeben dass als Maß auch die Geschwindigkeit, Beschleunigung und/oder der Ruck dienen können, welche mathematisch verarbeitet werden, insbesondere aufsummiert, aber auch gemittelt u.ä. Gemäß einer bevorzugten Ausführungsform wird das Aktivitätsniveau ähnlich einem Wärmebild farblich dargestellt, wobei eine hohe Aktivität beispielsweise rot bis gelb und eine niedrige Aktivität grün bis blau gekennzeichnet werden kann.

## Patentansprüche

1. Verfahren zur Visualisierung (200) von Aktivitätsschwerpunkten (220, 230, 240, 250) in einer durch wenigstens eine als Überwachungskamera ausgebildete Überwachungseinrichtung (111, 111', 111"; 210) überwachten Überwachungsszene mit den folgenden Schritten:
a) Identifizieren und/oder Nachverfolgen (102, 102', 102") bewegter Objekte (112, 112', 112") durch die wenigstens eine Überwachungseinrichtung (111, 111', 111 "; 210),
b) Ermitteln (103, 103', 103") einer räumlichen Lokalisierung (113, 113', 113") der bewegten Objekte (112, 112', 112") in der Überwachungsszene, und
c) Feststellen und Visualisieren (200) von Aktivitätsschwerpunkten (220, 230, 240, 250) der bewegten Objekte (112, 112', 112") in der Überwachungsszene, wobei die Aktivitätsschwerpunkte (220, 230, 240, 250) eine Bewegungsdichte, die sich auf eine Anzahl bewegter Objekte (112, 112', 112") bezieht, umfassen, und die Aktivitätsschwerpunkte (220, 230, 240, 250) basierend auf der Anzahl, der Geschwindigkeit, der Beschleunigung und dem Ruck der erkannten bewegten Objekte (112, 112', 112") bestimmt werden, wobei zur Visualisierung ein navigierbares 3D-Szenenmodell (201) verwendet wird und wobei durch Überlagerung der Aktivitätsschwerpunkte (220, 230, 240, 250) in einem Bild des 3D-Szenenmodells (201) eine Aktivitätsanzeige auch in verdeckten Bereichen des 3D-Szenenmodells (201) erzeugt wird.

2. Verfahren nach Anspruch 1 oder 2, bei dem die die Aktivitätsschwerpunkte (220, 230, 240, 250) mittels einer Farbkodierung und/oder einer Größenkodierung visualisiert werden, wobei einem Maß der Aktivität eine Farbe bzw. eine Größe zugeordnet wird.

3. Verfahren nach einem der vorstehenden Ansprüche, bei dem das Feststellen von Aktivitätsschwerpunkten (220, 230, 240, 250) auf Grundlage einer Bündelung von Bewegungen und/oder einer Bündelung von Bewegungstrajektorien vorgenommen wird.

4. Verfahren nach einem der vorstehenden Ansprüche, bei dem Überwachungseinrichtungen (111, 111', 111 "; 210) mit einander wenigstens teilweise überlappenden Überwachungsbereichen und/oder Überwachungseinrichtungen (111, 111', 111"; 210) mit einander nicht überlappenden Überwachungsbereichen verwendet werden.

5. Verfahren nach einem der vorstehenden Ansprüche, das in Echtzeit ausgeführt wird.

6. Überwachungssystem, das insbesondere zur Durchführung eines Verfahrens nach einem der vorstehenden Ansprüche eingerichtet ist, mit wenigstens einer als Überwachungskamera ausgebildeten Überwachungseinrichtung (111, 111', 111"; 210) zur Überwachung einer Überwachungsszene, Mitteln zum Identifizieren und/oder Nachverfolgen (102, 102', 102") bewegter Objekte (112, 112', 112") durch die wenigstens eine Überwachungseinrichtung (111, 111', 111"; 210), Mitteln zum Ermitteln (103, 103', 103") einer räumlichen Lokalisierung (113, 113', 113") der bewegten Objekte (112, 112', 112") in der Überwachungsszene und Mitteln zum Feststellen und Mittel zum Visualisieren (200) von Aktivitätsschwerpunkten (220, 230, 240, 250) der bewegten Objekte (112, 112', 112"), wobei die Aktivitätsschwerpunkte (220, 230, 240, 250) eine Bewegungsdichte, die sich auf eine Anzahl bewegter Objekte (112, 112', 112") bezieht, umfassen, und die Aktivitätsschwerpunkte (220, 230, 240, 250) basierend auf der Anzahl, der Geschwindigkeit, der Beschleunigung und dem Ruck der erkannten bewegten Objekte (112, 112', 112") bestimmt werden, wobei die Mittel zum Visualisieren (200) ein navigierbares 3D-Szenenmodell (201), umfassen, wobei durch Überlagerung der Aktivitätsschwerpunkte (220, 230, 240, 250) in einem Bild des 3D-Szenenmodells (201) eine Aktivitätsanzeige auch in verdeckten Bereichen des 3D-Szenenmodells (201) erzeugt wird.

## Claims

1. Method for visualizing (200) zones of higher activity (220, 230, 240, 250) in a surveillance scene monitored by at least one surveillance apparatus (111, 111', 111"; 210) in the form of a surveillance camera, comprising the following steps:
a) identifying and/or tracing (102, 102', 102") moving objects (112, 112', 112") by the at least one surveillance apparatus (111, 111', 111"; 210),
b) establishing (103, 103', 103") a spatial localization (113, 113', 113") of the moving objects (112, 112', 112") in the surveillance scene, and
c) determining and visualizing (200) zones of higher activity' (220, 230, 240, 250) of the moving objects (112, 112', 112") in the surveillance scene, wherein the zones of higher activity (220, 230, 240, 250) comprise a movement density relating to a number of moving objects (112, 112', 112") and the zones of higher activity (220, 230, 240, 250) are determined on the basis of the number, the speed, the acceleration and the jerkiness of the identified moving objects (112, 112', 112"), wherein a navigable 3D scene model (201) is used for visualization purposes, and wherein an activity indicator is generated even in covered regions of the 3D scene model (201) by superimposing the zones of higher activity (220, 230, 240, 250) in an image of the 3D scene model (201).

2. Method according to Claim 1 or 2, wherein the the zones of higher activity (220, 230, 240, 250) are visualized by means of color-coding and/or size-coding, with a measure of activity being assigned a color or a size.

3. Method according to one of the preceding claims, wherein the zones of higher activity (220, 230, 240, 250) are determined on the basis of bundling movements and/or bundling movement trajectories.

4. Method according to one of the preceding claims, wherein use is made of surveillance apparatuses (111, 111', 111"; 210) with at least partly overlapping surveillance regions and/or surveillance apparatuses (111, 111', 111"; 210) with surveillance regions that do not overlap.

5. Method according to one of the preceding claims, which is executed in real-time.

6. Surveillance system which is configured in particular to carry out a method according to one of the preceding claims, comprising at least one surveillance apparatus (111, 111', 111"; 210) in the form of a surveillance camera for monitoring a surveillance scene, means for identifying and/or tracing (102, 102', 102") moving objects (112, 112', 112") by means of the at least one surveillance apparatus (111, 111', 111"; 210), means for establishing (103, 103', 103") a spatial localization (113, 113', 113") of the moving objects (112, 112', 112") in the surveillance scene and means for determining and means for visualizing (200) zones of higher activity (220, 230, 240, 250) of the moving objects (112, 112', 112"), wherein the zones of higher activity (220, 230, 240, 250) comprise a movement density relating to a number of moving objects (112, 112', 112") and the zones of higher activity (220, 230, 240, 250) are determined on the basis of the number, the speed, the acceleration and the jerkiness of the identified moving objects (112, 112', 112"), wherein the means for visualizing (200) comprise a navigable 3D scene model (201), wherein an activity indicator is generated even in covered regions of the 3D scene model (201) by superimposing the zones of higher activity (220, 230, 240, 250) in an image of the 3D scene model (201).

## Revendications

1. Procédé de visualisation (200) d'épicentres d'activité (220, 230, 240, 250) dans une scène surveillée par au moins un dispositif de surveillance (111, 111', 111" ; 210) réalisé sous la forme d'une caméra de surveillance, comprenant les étapes suivantes :
a) identification et/ou poursuite (102, 102', 102") d'objets mobiles (112, 112', 112") par l'au moins un dispositif de surveillance (111, 111', 111" ; 210),
b) détermination (103, 103', 103") d'une localisation dans l'espace (113, 113', 113") des objets mobiles (112, 112', 112") dans la scène surveillée, et
c) définition et visualisation 200 d'épicentres d'activité (220, 230, 240, 250) des objets mobiles (112, 112', 112") dans la scène surveillée, les épicentres d'activité (220, 230, 240, 250) comprenant une densité de mouvement qui se rapporte au nombre d'objets mobiles (112, 112', 112"), et les épicentres d'activité (220, 230, 240, 250) étant déterminés en se basant sur le nombre, la vitesse, l'accélération et la saccade des objets mobiles (112, 112', 112") reconnus, un modèle de scène 3D (201) navigable étant utilisé pour la visualisation et un affichage d'activité même dans les zones couvertes du modèle de scène 3D (201) étant généré par superposition des épicentres d'activité (220, 230, 240, 250) dans une image du modèle de scène 3D (201).

2. Procédé selon la revendication 1 ou 2, avec lequel les les épicentres d'activité (220, 230, 240, 250) sont visualisés au moyen d'un codage en couleur et/ou d'un codage en taille, une couleur ou une grandeur étant associée à une mesure de l'activité.

3. Procédé selon l'une des revendications précédentes, avec lequel la définition des épicentres d'activité (220, 230, 240, 250) est effectuée en se basant sur une concentration de mouvements et/ou une concentration de trajectoires de déplacement.

4. Procédé selon l'une des revendications précédentes, avec lequel les dispositifs de surveillance (111, 111', 111" ; 210) utilisés comprennent des zones de surveillance qui se chevauchent au moins partiellement et/ou les dispositifs de surveillance (111, 111', 111" ; 210) utilisés comprennent des zones de surveillance qui ne se chevauchent pas.

5. Procédé selon l'une des revendications précédentes, lequel est exécuté en temps réel.

6. Système de surveillance, lequel est notamment conçu pour mettre en oeuvre un procédé selon l'une des revendications précédentes, comprenant au moins un dispositif de surveillance (111, 111', 111" ; 210) réalisé sous la forme d'une caméra de surveillance et servant à la surveillance d'une scène surveillée, des moyens pour identifier et/ou poursuivre (102, 102', 102") des objets mobiles (112, 112', 112") par l'au moins un dispositif de surveillance (111, 111', 111" ; 210), des moyens pour déterminer (103, 103', 103") une localisation dans l'espace (113, 113', 113") des objets mobiles (112, 112', 112") dans la scène surveillée, et des moyens pour définir et des moyens pour visualiser (200) des épicentres d'activité (220, 230, 240, 250) des objets mobiles (112, 112', 112"), les épicentres d'activité (220, 230, 240, 250) comprenant une densité de mouvement qui se rapporte au nombre d'objets mobiles (112, 112', 112"), et les épicentres d'activité (220, 230, 240, 250) étant déterminés en se basant sur le nombre, la vitesse, l'accélération et la saccade des objets mobiles (112, 112', 112") reconnus, les moyens de visualisation (200) comprenant un modèle de scène 3D (201) navigable, un affichage d'activité même dans les zones couvertes du modèle de scène 3D (201) étant généré par superposition des épicentres d'activité (220, 230, 240, 250) dans une image du modèle de scène 3D (201).
